Europäisches Patentamt

European Patent Office

Office européen des brevets

(19)

(11) Publication number: **0 026 770**
**B1**

# EUROPEAN PATENT SPECIFICATION

(12)

(45) Date of publication of patent specification: **16.03.83**

(51) Int. Cl.³: **G 01 N 15/07**

(21) Application number: **80900600.0**

(22) Date of filing: **10.04.80**

(86) International application number:
**PCT/EP80/00021**

(87) International publication number:
**WO 80/02198 16.10.80 Gazette 80/23**

(54) **DEVICE FOR HYDRODYNAMIC FOCUSSING OF A PARTICLE-SUSPENSION IN A LIQUID FLOW CYTOPHOTOMETER.**

(30) Priority: **10.04.79 NO 791229**

(43) Date of publication of application:
**15.04.81 Bulletin 81/15**

(45) Publication of the grant of the patent:
**16.03.83 Bulletin 83/11**

(84) Designated Contracting States:
**AT CH DE FR GB LI SE**

(56) References cited:
**DE - A - 2 656 263**
**US - A - 3 661 460**
**US - A - 3 738 759**

**REVIEW OF SCIENTIFIC INSTRUMENTS volume 46 no. 8, published August 1975, by American Institute of Physics (New York, US) W. Eisert et al., "Simple flow microphotometer for rapid cell population analysis", see pages 1021—1024**

(73) Proprietor: **ERNST LEITZ WETZLAR GMBH Ernst-Leitz-Strasse 30 Postfach 20 20 D-6330 Wetzlar 1 (DE)**

(72) Inventor: **STEEN, Harald B. Gjoaveien 3B Oslo 3 (NO)**
Inventor: **LINDMO, Tore Valhallaveien 48 d N-1412 Sofiemyr (NO)**

## Device for hydrodynamic focussing of a particle-suspension in a liquid flow cytophotometer

The invention relates to a device for liquid flow cytophotometer including a device for hydrodynamic focussing of a cell- or particle-suspension towards a measuring area, and an optical excitation- and detection-system.

Cytophotometry is an important operating method in cell biology research, especially in the field of comprehensive cancer research. Thus, it is considered important to investigate the abnormal growth in cell populations where new cells are created by means of cell division. During its synthesis phase the cell will double its DNA-content. In this way one gets two new cells when the cell divides (the mitotic phase). By measuring the DNA-content per cell it is possible to determine the distribution of the cells on the various cell cycle phases. The fraction of cells containing an increased DNA-content in a cell population can be a measure of the multiplying activity. It is important that the distribution of the cells in a cell population of various cell cycle phases can be determined with a great accuracy. Statistical errors can only be avoided by measuring several thousand cells. This necessitates that the individual measurements are done very fast.

The so-called liquid flow cytophotometry is a technique which is now applied for such measurements. Today there is an increasing use of this technique in connection with research as well as diagnostic purposes. The principle of such a method is to lead a limited flow of cells stained with a fluorescent dye, quantitatively bound to the cell components which are to be studied, through a beam of exciting light and then measure the intensity of the resulting fluorescence pulses. The distribution of the cells with regard to a certain component, such as DNA, can thus be determined with great accuracy and with a rate of the order of $10^3$ per second. The cells are automatically transported to the measuring spot in a liquid flow, usually water.

Thus, the cells are not spread on a glass plate, but are kept in a liquid suspension. This suspension is driven through a capillary tube, and by means of a concentric sheath flow flowing around the tube mentioned above and in the same direction as the cells and containing no particles, the cell flow is hydrodynamically focussed so that the cells pass through the strictly limited area in the measuring focus of the cytophotometer. The cells pass by one after the other through this measuring area at high speed, just like mentioned above.

The measuring of the cell components is done by means of a microfluorometer. As mentioned above, the cell component must be stained with a fluorescent dye. When a cell containing such a fluorescent dye passes through the focussing area of the microscope lens, it excites fluorescent light which is collected by the lens and then lead to a photomultiplier. The signal from this photomultiplier is registered and expresses the cell-contents of the component in question.

A well-known liquid flow cytophotometer (US—A—3 738 759) applies the technique mentioned above. It comprises a closed system including a sheath flow measuring chamber. This chamber consists of a glass- or metal-body with channels in a T-form. By means of suction the sheath flow and the particle suspension which is to be measured are lead through the channel forming the T-form system, and accurately centered along the optical axis of the system. In this way one gets a measuring area at the peak of the T-form, i.e. at the area of the perpendicular channels constituting the arms of the T-form. One of the perpendicular channels transports a cleansing agent, while the other represents a drainage channel for the fluid flow containing measured particles. Thus, by using this well-known technique one gets a supply of particles along the optical axis with a focussing of every particle lying in the measuring aperture level. The optical system which is applied here comprises a so-called oil immersion optics which is known to the expert. The optics is in contact with the liquid suspension containing the particles or the cells which are to be studied.

There are also known liquid flow cytophotometers described in the US-A 3 661 460 using closed sheath flow measuring chambers, but where the liquid flow is lead perpendicularly through the exciting light in the measuring area.

Another liquid flow cytophotometer is described in DE—A 2 709 399. Within a closed chamber a hydrodynamically focussed liquid flow of particles is directed at a fixed angle towards a transparent plate covering the chamber. The flow channel is bent like a knee in the portion where the particles pass the transparent plate, thus forming an edge defining two observation zones. The diameter of the flow channel around this edge is further narrowed, so that some times a blocking of the flow may occur. There are strong mechanical and hydrodynamic limitations regarding the knee angle and with respect to the angle between the cover plate and the bisectrix of the edge. For cleaning the inner side of the cover plate the chamber has to be disassembled. Observation is only possible by an incident light method directing the light through the cover plate.

The well-known liquid flow cytophotometers mentioned above are complicated, and that leads to high construction expenses. Nowadays there is an ever increasing demand for a simple and inexpensive instrument which can be used in connection with routine investigations. The present invention provides a construction using a standard fluorescence microscope —

preferable with immersion optics — with a suitable photometer, and hydrodynamic focussing of a particle suspension. This construction is relatively inexpensive, easy to operate and gives a high resolution and stability.

In the device according to the invention the focussing device is being formed as a separate nozzle assembly which is directed at a predetermined angle $\alpha$ to the optical axis y of the system towards a surface of a plate situated in the object plane of the optics, thus directing the laminar liquid flow through the open air towards this surface. In this way a laminar liquid flow of the suspension is obtained. In contrary to the state of the art it is pointed out that this device does not apply a closed chamber, wherein the particle suspension is lead and focussed, but that the liquid jet is passed towards the measuring area in the air. Using this invention the measuring area can be the surface of a transparent plate, for instance a replaceable cover glass, in contact with the optics. But it is also possible to have the optics on the same side of the plate as the nozzle assembly.

The present device provides measuring results at least as good as the best results obtained with the above mentioned constructions. Furthermore, the present device results in a much easier setting up and focussing of the instrument than is the case with well-known systems. Due to the measuring area and the nozzle being constructed as separate parts situated in air, the user can easier inspect and clean the instrument. Thus, the cover glass in the measuring area can easily be washed or replaced. Furthermore, it is easy to flush the hydrodynamic focussing device including the nozzle. As the nozzle assembly is adjustable in relation to the optical axis of the system, various angles of incidence can be obtained for the liquid jet containing particles.

Thus, the nozzle assembly can be turned between a vertical and a horizontal position in relation to the level of the measuring area. The adjustable device of the nozzle assembly makes it possible to measure asymetric effects of the particles or the cells which are being studied. This is of interest when one needs information about the form of the particles. Such effects are difficult to measure when the liquid jet is permanently vertically aimed at the measuring area, as is the case with the above mentioned well-known systems where a closed liquid flow chamber is applied.

A drainage device is situated in the periphery of the measuring area, and this device is preferable made by a tube connected to a suction pipe.

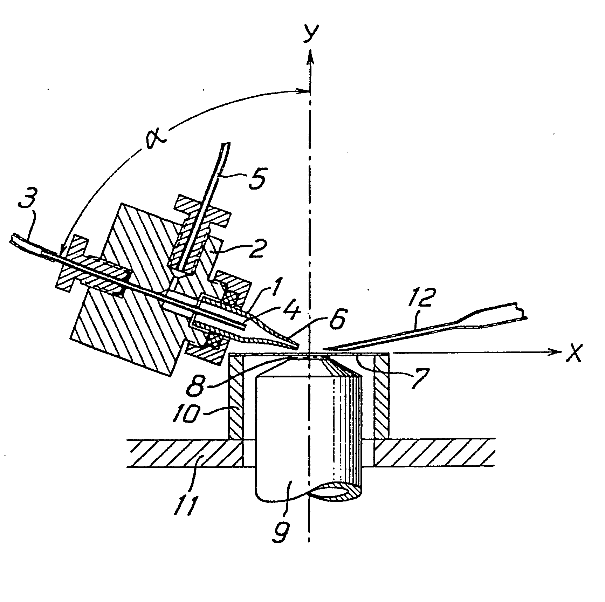

In the following the invention will be described with reference to the enclosed figure showing a schematic side view of the present device. The nozzle assembly is adjusted so that it forms an acute angle with the level of the measuring area.

The nozzle assembly 1 is placed in a holder 2 with an inlet tube 3 for the sample suspension containing particles which are to be studied. This inlet tube 3 dissolves into a thin tube which extends centrally and axially into the nozzle assembly 1. The holder 2 is provided with an inlet tube 5 for sheath flow liquid, and this tube leads into the nozzle assembly 1 so that the sheath flow liquid is able to flow around the cavity needle 4. The nozzle assembly has a nozzle 6 with its outlet over a cover glass 7 situated above and in contact with an immersion oil coating 8 on a microscope objective 9.

The figure shows that the cover glass 7 is resting on a holder 10 connected to the microscope stage. As mentioned above, the nozzle assembly 1 can be adjusted in relation to the optical axis of the system, i.e. between a vertical and a horizontal position, represented by the y-axis and the x-axis, respectively. In the figure the holder 2 with the nozzle assembly 1 and the nozzle 6 is inclined in relation to the y-axis of an acute angle $\alpha$. In order to remove liquid from the cover glass 7 as this flows out of the nozzle 6 a drainage 12 connected to a suction pipe has been set up.

As for a further description of the liquid flow cytophotometer, describing how the present and schematically shown device is operated, reference is made to the literature in this field which is known to the specialist.

When using the present device in a liquid flow cytophotometer, a particle- or cell-suspension is lead through the tube (3). At the same time a sheath flow liquid is lead through the tube 5, and by means of the nozzle 6 on the nozzle assembly 1 these two components create a hydrodynamically focussed sample stream constituting a liquid flow in air, which is directed towards the microscope cover glass 7 on the objective system 8, 9. In this way a laminar well-defined and stable flowing area is obtained on the cover-glass 7. This can be observed through the fluorescence microscope in incident light, i.e. with the excitation light focussed through the objective 9. The liquid is removed from the cover glass 7 by means of the drainage 12.

It has been found that large angles of incidence, for instance $\alpha = 70°$, give somewhat better results than those obtained when using other settings of the angle of incidence, for instance $\alpha = 0°$, i.e. the liquid flow is lead perpendicularly onto the cover glass 7.

Generally, the present device may be applied in connection with any fluorescence microscope with the illumination through the objective. The high speed of the liquid flow in the air (approximately 10 m/sec.) and the laminar flowing pattern on the cover glass has the effect that the system may be set up in any direction. The present device enables the specialist to set up a liquid flow cytophotometer which is superior as regards resolution, simplicity and rational use, and which makes it possible to obtain measuring results at least as good as those obtained by well-known commercially available systems.

When set up vertically the present device may be applied for volume measurements based on the Coulter principle by applying a metal coating on the inner surface of the nozzle 6 and a ring on the upper surface of the cover glass 7, thus providing electrodes for the ionic current applied for such measurements. In this way the short liquid flow between the nozzle 6 and the cover glass 7 will constitute the sensing region of a change in the electric impedance induced by a passing particle or cell. Furthermore, light scattering measurements may be made by using a phase contrast objective and an annular detector situated in the shadow cast by the phase contrast ring. Large angles of incidence (i.e. 70° or more) are most practical for such light scattering measurements, because such angles of incidence make it possible to center a light scattering detector in the area of the optical axis.

## Claims

1. Device for liquid flow cytophotometer including a device for hydrodynamic focussing (4,6) of a cell- or particle-suspension towards a measuring area, and an optical excitation- and detection-system (9), characterised by the focussing device being formed as a separate nozzle assembly (1) which is directed at a predetermined angle ($\alpha$) to the optical axis (y) of the system towards a surface of a plate (7) situated in the object plane of the optics (9), thus directing laminar liquid flow through the open air towards this surface.

2. Device according to claim 1, characterised in that the plate (7) is transparent.

3. Device according to claim 1 or 2, characterised in that the plate (7) is replaceable.

4. Device according to claim 1, characterised in that the nozzle assembly (1) is adjustable with respect to the optical axis (y).

5. Device according to claim 1, characterised by a drainage device (12) — made by a tube connected to a suction pipe — being situated in the periphery of the measuring area.

## Revendications

1. Dispositif pour un cytophotomètre à écoulement liquide comprenant un dispositif pour la focalisation hydrodynamique (4, 6) d'une suspension de cellules ou de particules vers une zone de mesure et un système d'excitation et de détection optique (9), caractérisé en ce que le dispositif de focalisation a la forme d'un ensemble séparé d'une tubulure (1) qui est dirigé à un angle prédéterminé ($\alpha$) par rapport à l'axe optique (y) du système vers une surface d'une plaque (7) située dans le plan objet du système optique (9), afin de diriger ainsi un écoulement liquide laminaire à travers l'air libre, vers cette surface.

2. Dispositif selon la revendication 1, caractérisé en ce que la plaque (7) est transparente.

3. Dispositif selon la revendication 1 ou 2, caractérisé en ce que la plaque (7) est remplaçable.

4. Dispositif selon la revendication 1, caractérisé en ce que l'ensemble de la tubulure (1) est réglable par rapport à l'axe optique (y).

5. Dispositif selon la revendication 1, caractérisé par un dispositif de drainage (12) formé d'un tube connecté à un tube d'aspiration, qui est situé dans le pourtour de la zone de mesure.

## Patentansprüche

1. Vorrichtung für Durchfluß-Zytophotometer mit einer Vorrichtung (4, 6) zum hydrodynamischen Fokussieren eine Zellen- oder Partikelsuspension auf einen Meßbereich und einem optischen Anregungs- und Detektorsystem (9), dadurch gekennzeichnet, daß die Fokussiervorrichtung als eine getrennte Düsenanordnung (1) ausgebildet ist, die unter einem vorgegebenen Winkel ($\alpha$) mit der optischen Achse (y) des Systems gegen die Oberfläche einer Platte (7) gerichtet ist, welche in der Objektebene des optischen Systems (9) angeordnet ist, so daß ein laminarer Flüssigkeitsstrom durch die freie Luft gegen diese Oberfläche gerichtet wird.

2. Vorrichtung nach Anspruch 1, dadurch gekennzeichnet, daß die Platte (7) transparent ist.

3. Vorrichtung nach Anspruch 1 oder 2, dadurch gekennzeichnet, daß die Platte (7) auswechselbar ist.

4. Vorrichtung nach Anspruch 1, dadurch gekennzeichnet, daß die Düsenanordnung (1) in Bezug auf die optische Achse (y) einstellbar ist.

5. Vorrichtung nach Anspruch 1, gekennzeichnet durch eine Absaugvorrichtung (12) gebildet von einer mit einer Absaugleitung verbundenen Röhre — welche am Rand des Meßbereichs angeordnet ist.